# EUROPEAN PATENT APPLICATION

(11) **EP 2 364 874 A2**
(43) Date of publication of application: **14.09.2011**
(21) Application number: 11164781.4
(22) Date of filing: 21.07.2009
(51) Int. Cl.: B60L 11/18

(54) **An authentication system for a plug-in electric drive vehicle**

(30) Priority: 21.07.2008 US 82425 P
(62) Divisional of application: 09799860.3
(71) Applicant: Dius Computing Pty Ltd, Melbourne, Victoria 3000 (AU)
(72) Inventor: Staugaitis, Paul, Melbourne, Victoria 3000 (AU); Anderson, Mark, Melbourne, Victoria 3000 (AU)
(74) Representative: Gover, Richard Paul

(57) **Abstract**

An energy auditing system for a plug-in electric drive vehicle. The system comprises a first device electrically connectable to a first power apparatus and an electrical power connector. The electrical power connector establishes an electrical power path between the first device and a remote device which is electrically connectable to a second power apparatus. The first device comprises control means, a first sensor, a control switch and a receiver. The control means controls operation of the first device. The first sensor selectively measures an amount of electrical energy delivered to or received from the first power apparatus and generates a first signal representative of the measured amount. The control switch is configurable to electrically connect and disconnect the first device to the first power apparatus. The receiver is configured to receive an energy audit signal transmitted from a remote device, the energy audit signal representing an amount of energy transferred over the electrical power path in a specified time interval. The first device's control means is operable to compare the first signal with the received energy audit signal in the same specified time interval and to electrically disconnect the first device from the first power apparatus when a power loss between the respective devices is detected.

## Description

### Cross-Reference to Related Applications

The present application claims priority from United States of America Provisional Patent Application No 61/082425 filed on 21 July 2008, the content of which is incorporated herein by reference.

### Technical Field

This invention concerns an authentication system for a plug-in electric drive vehicle. This invention also concerns an energy auditing system for a plug-in electric drive vehicle.

### Background Art

Electric drive vehicles use an electric motor to provide all or part of the mechanical drive power of the vehicle. Types of electric drive vehicles include fuel cells which produce electricity on-board from a fuel such as hydrogen, batteries which store power from the electric grid in an electrochemical cell, and hybrids which produce electricity on-board from an internal combustion engine turning a generator. Plug-in electric drive vehicles may be any of the above types and have a grid connection to enable recharging from the grid. With the high profile of environmental concerns and escalating costs of fossil fuels the popularity of electric vehicles is steadily increasing.

Unlike the refuelling of fossil-fuelled vehicles, and aside from advancements in battery technology, grid charged electric drive vehicles may take several hours to fully charge. Whilst recharging at night time may be suitable for certain owners of plug-in electric drive vehicles, not all owners will have secure parking in proximity to their residential premises and recharging from an outlet in a location other than the owner's home needs to be possible if such vehicles are to be feasible on a large scale. Possible recharging locations include public car parks in proximity to office precincts and shopping centres and high rise apartment towers. It is necessary therefore, to ensure that the owner of an electric drive vehicle receives the amount of energy from the grid which they are subsequently charged for. It is also necessary to ensure that power outlets in publicly accessible areas do not deliver energy to unidentified and/or unauthorised devices.

### Disclosure of Invention

In a first broad aspect, the invention provides an authentication system for a plug-in electric drive vehicle, the system comprising:
a first device electrically connectable to a first power apparatus;
an electrical power connector to establish an electrical power path between the first device and a remote device, where the remote device is electrically connectable to a second power apparatus; the first device comprising:
   a receiver configured to receive a request containing a unique identifier from the remote device through the electrical power connector;
   a control switch configurable to electrically connect and disconnect the first device to the first power apparatus; and
   control means in communication with the receiver to control operation of the first device, the control means operable to respond to the request to initiate an authentication process to determine whether or not the remote device is authentic and authorised to exchange power with the first device, and to activate the control switch to electrically connect the first device to the first power apparatus only upon an authentic and authorised determination.

In a preferred embodiment the receiver is a receiver portion of a powerline transceiver to enable data communication over the electrical power path. The electrical power path includes a conductor which is preferably adapted to transmit both power and data between the respective devices.

The authentication system may further comprise a remote device.

The first and second power apparatus may be either a power supply or a power load. It should be appreciated that when the first power apparatus is a power supply the second power apparatus is a power load, and visa versa.

In one embodiment the respective devices are configured such that the first device is electrically connectable to a first power apparatus which is a regional electric grid (through a grid outlet at a docking facility) and the remote device is electrically connectable to the second power apparatus which is an energy storage system, where the power grid functions as a power supply and the energy storage system functions as a power load. The docking facility may, for example, be a residence or a place of business.

In an optional embodiment the respective devices are configured such that the first device is electrically connectable to the first power apparatus which is an energy storage system and the remote device which is electrically connectable to the second power apparatus is a regional electric grid (through a grid outlet at a docking facility), where the power grid functions as a power load and the energy storage system functions as a power supply. An advantage of this embodiment is that electricity can be sent to the grid which reduces the net metered electricity at the particular outlet. The energy storage system may be, for example, a battery or a fuel cell of a plug in electric drive vehicle.

The system may be configured to selectively operate in accordance with either of these embodiments, depending on whether the electric drive vehicle is in a recharging mode or a power supply mode.

In any of the above mentioned embodiments the first device and/or the remote device may be detachably connectable to the respective power apparatus. Optionally, the first device and/or the remote device may be mechanically integrated into the respective power apparatus. For instance the first device may be integrated into a socket of the docking facility.

The electrical power connector may be a standard power cable. The first device and the remote device may each comprise a socket, or connector, to engage the electrical power connector. The sockets may be standard AC electrical sockets or may be of an SAE specification, such as, but not limited to SAE J1772, or may be of an IEC 62196 specification. The socket or connector is preferably configured to enable bidirectional power flow.

In any of the above mentioned embodiments the remote device may comprise:
a transmitter configured to transmit a request containing a unique identifier to a first device through the electrical power connector; and
a controller in communication with the remote device's transmitter to control operation of the remote device.

The remote device may further comprise a control switch configurable to electrically connect and disconnect the remote device to the second power apparatus.

The remote device's transmitter may be a transmitter portion of a powerline transceiver to enable data communication over the electrical power path. The, or each, transceiver may be a powerline transceiver such as a C-bus, LonWorks, or other suitable transceiver that makes data communication possible over power lines.

The control means may further include a clock.

The, or each device, may further comprise an additional transceiver communicatively coupled to the device's respective control means to enable two way communication over a wireless network or medium other than the electrical power path.

In any of the above mentioned embodiments the first device may further comprise a first sensor in communication with the control means to measure the amount of energy transferred between the first device and the first power apparatus. The first sensor may measure the power received from or delivered to the first power apparatus. The remote device may further comprise a second sensor in communication with the remote device's controller to measure the amount of energy delivered to or received from the second power apparatus through the electrical power connector.

In an embodiment where the receiver is a receiver portion of a transceiver, the first device may be configured to transmit to the remote device, a first signal representative of the amount of energy delivered to or received from the first power apparatus in any given interval. The remote device may be configured to transmit to the first device, a second signal representative of the amount of energy transferred through the electrical power connector in any given interval. Preferably the first and second signals respectively include a timestamp identifying the amount of energy transferred in a specified time interval. The, or each, device may include an encryption means to encrypt the respective timestamp.

In a preferred embodiment the first and/or second signals include a cryptographic signature. In such an embodiment the first device's control means and/or the second device's controller may use public key cryptography to authenticate the cryptographic signature and on a determination that the signature is not authentic to operate the control switch to electrically disconnect the respective device from the respective power apparatus.

In an optional embodiment the first device comprises a memory to store a record of unique identifiers, each of which is representative of a remote device which is authorised to exchange power with the first device, and the control means is operable to find a match for the received unique identifier against stored records and to activate the control switch to electrically connect the first device to the first power apparatus when a match is found.

The first device's control means and/or the second device's controller may be programmed to compare the first signal and the second signal for a corresponding timestamp and when the first signal is not substantially equal to the second signal to electrically disconnect the device to the respective power apparatus.

The first and/or second sensor may be a solid state power meter. The power meter may comprise a meter and a processor. The meter may receive voltage and current inputs which are then processed by the processor to calculate the power drawn. The power meter may comprise a real time clock, a memory and analog to digital converters.

The respective first and second signals may be transmitted over the electrical power path. Optionally, the respective first and second signals may be transmitted via the additional transceivers over a medium other than the electrical power path. In such an example the respective devices may have a wireless transmitter and/or wireless receiver in communication with the respective control means.

It is an advantage of preferable embodiment of the invention in that data can be transacted over the electrical cable between a management device and a recipient device to establish and validate the identity of the recipient device.

In a second broad aspect, the invention provides an energy auditing system for a plug-in electric drive vehicle, the system comprising:
a first device electrically connectable to a first power apparatus;
an electrical power connector to establish an electrical power path between the first device and a remote device which is electrically connectable to a second power apparatus; the first device comprising:
   control means to control operation of the first device;
   a first sensor to selectively measure an amount of energy delivered to or received from the first power apparatus and to generate a first signal representative of the measured amount;
   a control switch configurable to electrically connect and disconnect the first device to the first power apparatus; and
   a receiver configured to receive an energy audit signal transmitted from a remote device, the energy audit signal representative of an amount of energy transferred over the electrical power path in a specified time interval;
wherein the first device's control means is operable to compare the first signal with the received energy audit signal in the same specified time interval and to electrically disconnect the first device from the first power apparatus when a power loss between the respective devices is detected.

The control means may be operable to electrically disconnect the first device from the first power apparatus when the first signal is not substantially equal to the energy audit signal.

In a preferred embodiment the energy audit signal includes a cryptographic signature. In such an embodiment the device's control means may use public key cryptography to authenticate the cryptographic signature and on a determination that the signature is not authentic to operate the control switch to electrically disconnect the first device from the first power apparatus.

In the preferred, or an optional embodiment, the control means is operable to electrically disconnect the first device from the first power apparatus in the event that an energy audit signal is not received within a specified time interval.

In one embodiment of the second aspect of the invention, the receiver is a receiver portion of a powerline transceiver to enable data communication over the electrical power path. In such an embodiment the energy audit signal and electrical power may be carried over the same conductor of the electrical power path.

In accordance with the second aspect of the invention, the energy auditing system may further comprise a remote device.

In one embodiment of the second aspect of the invention, the respective devices may be configured such that the first device is electrically connectable to a first power apparatus which is a regional electric grid (through a grid outlet at a docking facility, or through a utility owned meter located at the particular premise) and the remote device is electrically connectable to the second power apparatus which is an energy storage system. The docking facility may, for example, be a residence or a place of business.

In an optional embodiment the second aspect of the invention, the respective devices may be configured such that the first device is electrically connectable to the first power apparatus which is an energy storage system and the remote device which is electrically connectable to the second power apparatus is a regional electric grid (through a grid outlet at a docking facility).

The energy auditing system may be configured to selectively operate in accordance with either of these embodiments of the second aspect of the invention depending on whether the electric drive vehicle is in a recharging mode or a power supply mode.

In accordance with the second aspect of the invention the first device and/or the remote device may be detachably connectable to the respective power apparatus. Optionally, the first device and/or the remote device may be mechanically integrated into the respective power apparatus. For instance the first device may be integrated into a socket of the docking facility. The electrical power connector may be a standard power cable. The first device and the remote device may each comprise an engagement means, such as a socket or connector, to engage the electrical power connector. The engagement means may be standard AC electrical sockets. The engagement means is preferably configured to enable bidirectional power flow.

In any one of the previously described embodiment of the second aspect of the invention the remote device may comprise:
a controller to control operation of the remote device;
a second sensor in communication with the control means to measure the amount of energy delivered to or received from the second power apparatus;
a transmitter to transmit an energy audit signal; and
a receiver to receive an energy audit signal representative of an amount of energy delivered over the electrical power path in a specified time interval.

Preferably the remote device further comprises a control switch configurable to electrically connect and disconnect the remote device to the second power apparatus.

The receiver may be one of a wireless receiver and a powerline receiver. The transmitter may be one of a wireless transmitter or a powerline transmitter. Optionally, the receiver may be a receiver portion of a transceiver and the transmitter may be a transmitter portion of a transceiver. The, or each, transceiver may be a powerline transceiver. The energy audit signal may be transmitted through the electrical power connector using the powerline transceivers.

The control means and the controller may include a clock.

The first and/or second sensor may be a solid state power meter. The power meter may comprise a meter and a processor. The meter may receive voltage and current inputs which are then processed by the processor to calculate the power drawn. The power meter may comprise a real time clock, memory and analog to digital converters.

### Brief Description of the Drawings

Specific embodiments of the invention will now be described, by way of example only, and with reference to the accompanying drawings in which:
Fig. 1 illustrates a first embodiment of an authentication and energy auditing system;
Fig. 2 illustrates the general operating environment of the energy auditing system shown in figure 1; and
Fig. 3 illustrates a further embodiment of an authentication and energy auditing system.

### Best Modes for Carrying Out the Invention

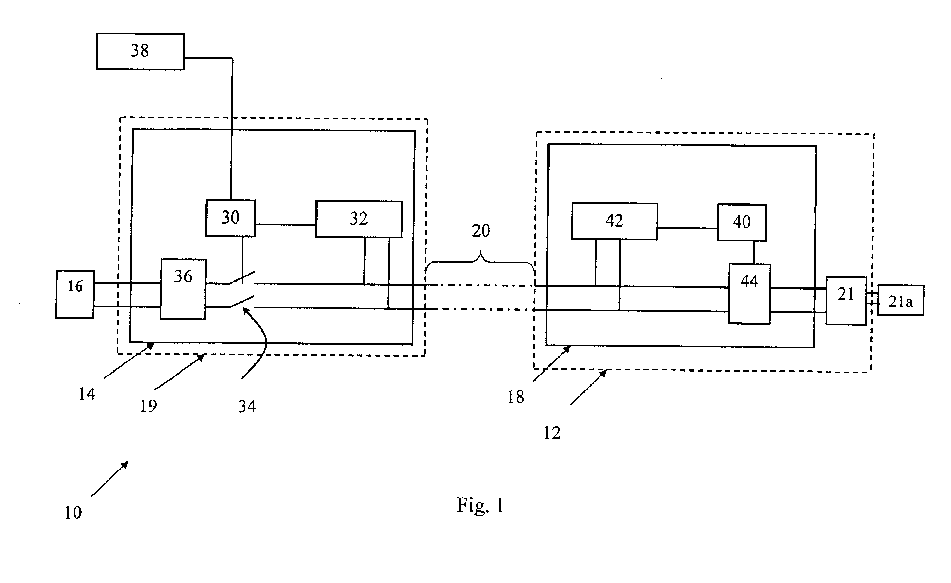

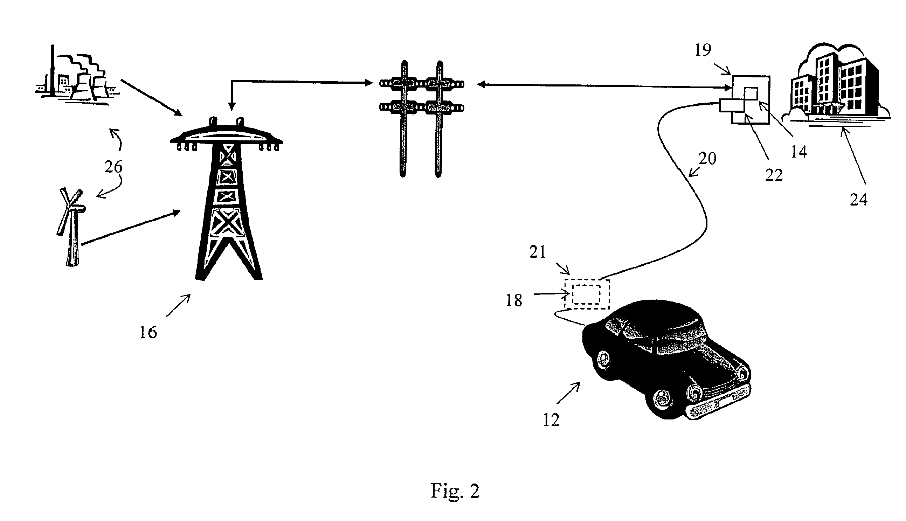

The following example is described with reference to figures 1 and 2 which illustrate an authentication and energy auditing system 10 for a plug-in electric drive vehicle 12. The system 10 includes a first device, referred hereinafter as a management device 14 and a remote device 18.

The management device 14 is incorporated into a charging terminal 19 and is electrically coupled to an outlet 22 of that terminal 19. The charging terminal 19 is located in a shopping centre's carpark 24. Power is supplied to the management device 14 from a first power source in the form of a power grid 16 which is powered by a variety of generators 26. It should be appreciated that the term power grid used herein refers to a power distribution system/network that connects producers of power with consumers of power. The power grid may include generators, transformers, switching stations, metering equipment and safety equipment as part of either or both the transmission system or the distribution system.

The remote device 18 is preinstalled into an electric drive vehicle 12 (a second power apparatus). The remote device 18 is electrically coupled to the charging circuitry 21 of that vehicle 12. In figure 2, the charging circuitry and remote device are shown external to the vehicle for illustration purposes only. The vehicle 12 includes one or more batteries (21a) as its primary source of energy for powering an electric motor connected to the wheels for propulsion of the vehicle 12. Types of batteries include lead-acid batteries, nickel metal-hydride, lithium-ion, and lithium-metalpolymer batteries. The batteries and charging circuitry make up the vehicle's energy storage system.

An electrical power connector in the form of an electric cable 20 is provided, one end of which plugs into the outlet 22 of the charging terminal 19 the other end of which plugs into the plug of the vehicle 12 to establish an electrical power path between the management device 14 and the remote device 18. It should be appreciated that the sockets must be compatible with single and 3-phase electric grids. They should be low cost, of durable design and capable of withstanding the rigors of continuous outdoor use. Importantly they must have more than one, redundant safety features to protect the user, and it should lock in place to prevent tampering and theft. Finally, the cable 20 must be compatible with data and communication between the vehicle and the electrical grid.

The electrical connection between the management device 14 and the outlet 22 and the remote device and the charging circuitry 21 of the vehicle 12 is made by way of bidirectional connectors (not shown) to permit electrical power to be selectively received from the grid 16 by the vehicle's 12 batteries or to be selectively delivered to the grid 16 from the vehicle's 12 batteries when the connection is made over the electric cable 20.

With particular reference to figure 1, the system is configured to transfer energy from the grid 16 to the vehicle 12.

The management device 14 includes a control means in the form of a conventional microprocessor 30 control operation of the device. Central to the remote device 18 is a controller the form of a conventional microprocessor 40. The microprocessor 30 includes a memory (not shown).

The management device 14 and remote device 18 each include a powerline transceiver 32, 42. A powerline communication link L1 is established by the transceivers 32 and 42 which uses the power path of the cable 20 to communicate data between the management device 14 and the remote device 18, in either direction. A control switch in the form of a contactor 34 is configurable to electrically connect and disconnect the management device to the grid 16 upon instructions of the microprocessor 30.

The management device 14 includes a sensor in the form of an energy meter 36 to measure the amount of energy received from or delivered to the grid 16. The energy meter 36 senses electrical characteristics of the energy received by the management device 14 for example, voltage levels, current levels, power consumption, supply frequency, and the like.

The remote device 18 further includes a sensor in the form of an energy meter 44 to measure the amount of energy received over the electric cable 20. The energy meter 36 senses electrical characteristics of energy into the remote device 18 for example, voltage levels, current levels, power consumption, supply frequency, and the like.

The following description details use of the system 10 which allows for the secure charging of electric drive vehicles 12 without the need for an attendant or the owner to monitor the transaction.

A user, Alice, purchases a plug-in electric vehicle 12 with a remote device 18 pre-installed. When Alice registers with the organisation managing the system 10 (referred herein after as KeyCharge) an account is created for Alice which resides within KeyCharge's billing and management system 38. A unique digital certificate and private key is programmed into the processor's 40 memory to allow Alice to prove her identity. The unique digital certificate is formed by binding Alice's public key to her account identifier and having this signed by a certifying authority. The certificate may utilize the X.509 format, or any other suitable format.

In an initial, idle state, the contactor 34 is in an open state and therefore the management device 14 is not electrically connected to the remote device 18. In this state, the management device's meter 36 indicates to the microprocessor 30 that there is voltage available and that no energy is flowing through the management unit 14. The contactor 34 is open and therefore de-energised. The microprocessor 30 continually checks for requests from remote devices via its powerline transceiver 32.

Alice parks her plug-in electric vehicle 12 next to terminal 19 located at the shopping centre 24. Alice attaches the charging cable 20 attached to the outlet 22 of the terminal 19 to the charging plug (not shown) of her vehicle 22. This cable 20 is a standard three pin electric outlet plug where the power lines are additionally used for the communications channel.

The system progresses through an initialisation stage, an authentication stage and then an energy transfer stage in order to securely transfer energy between the management device 14 and a remote device 18.

Initially, a data communications channel is established over the power line cable 20. The devices respective microprocessors 30, 40 establish a communications link L1 with each other over the interconnecting power cable 20 using their respective transceivers. The management device's transceiver 32 periodically sends a signal through the charging cable 20 and waits for a response from the remote device's transceiver 42.

If a communications channel cannot be established then the microprocessor 30 communicates a signal to a display (66) on the terminal 19 which provides a visual indication to Alice by way of a red error light. The management device 14 will continue to attempt to establish the connection in case the failure was temporary.

After establishing a communications channel, an authentication process is used to automatically prove Alice's (remote device 18) identity to the management device 14. The remote device's microprocessor 40 retrieves the digital certificate from memory, and transmits it over the electric cable 20 by way of the communication link L1.

Upon receipt of the digital certificate over the electric cable 20, the management device 14 then attempts to validate the digital certificate by validating the Certifying Authority signature in the certificate using the public key of the Certifying Authority stored in the management device's 14 memory. If the signature validation fails the digital certificate is deemed invalid. Microprocessor 30 then communicates a signal to a display on the terminal 19 which provides a visual indication to Alice by way of a red error light.

Once the digital signature in the certificate has been validated (proving the public key in the certificate is associated with Alice's account identifier), the management device 14 must ensure the remote device 18 knows Alice's secret key. To do this the management device 14 issues a challenge message containing random data encrypted with Alice's public key (obtained from the validated certificate) to the remote device 18. The remote device 18 decrypts the challenge data using Alice's private key stored in the processor memory 40. It then performs a hash function over the data and returns it to the management device 40. Device 40 then compares the returned data with the data it originally transmitted (after it applies the same hash function to it), if they are the same, then device 18 has proven it knows Alice's secret key and her identity has been established.

The management device 14 may also require Alice to enter a PIN number or other secret password into a keypad of the terminal 19 as an additional check to establish Alice's identity. In this case a hash of her password would be supplied to the management device 14 in the digital certificate.

If the digital certificate is valid and the challenge/response is successful (and password check is valid), then the management device 14 has established identity of the remote device. The management device's microprocessor 30 then communicates with the billing and management system 38 to attempt to validate that Alice is authorised to receive energy from the terminal. This authorisation may be a check to ensure Alice's account has sufficient funds, or may simply be a check that Alice is on a "whitelist" of authorised parties for the terminal. The later is especially useful if the terminal 19 is actually installed at Alice's private residence). If Alice is not authorised then a visual indication is similarly provided to Alice on the display of the terminal 19.

Optionally Alice may preset the amount of energy to be delivered either as a monetary (dollars), time (minutes to charge), or energy (Watt hours) measure. With this feature, when the amount of energy delivered has been met, the management device's microprocessor 30 will activate the contactor 34 to open causing electrical disconnection of the management device to the grid 16 and therefore the vehicle 12.

Once Alice's identity has been established and authorisation given, a session is established and the management device begins delivery of energy to Alice's vehicle 12. In the energy transfer state, the management device's microprocessor 30 activates the contactor 34 to close. This causes energy to flow from the AC mains supply 16, through the management device 14 through the electric cable 20, through the remote device 18 and to the vehicle's 12 charging circuitry.

Periodically (e.g. four times per second) during the delivery, the remote device's transceiver 42 transmits an encrypted energy transfer audit signal. The message is signed and encrypted using Alice's private key that is stored within the microprocessor's 40 memory. The signal contains the accumulated amount of energy since a previous audit signal that was sent from Alice's vehicle 12 during the session. The energy audit signal is transmitted through the electric cable 20 by way of the communication link L1.

The management device's processor 30, decrypts the signal, validates the signature, then compares the amount of energy claimed to be delivered by Alice's device 18 as recorded by meter 44 with the actual amount delivered from the grid 16 as recorded by meter 36. If the values do not compare (allowing for measurement accuracy) then the microprocessor 30 activates the contactor 34 to electrically disconnect the remote device 18 from the charging terminal 19. A visual indication is provided to Alice by way of the visual display on the terminal 19.

It should be appreciated that if at any time during the transmission of energy, signature validation fails (for example a third party attempts to disconnect Alice's car from the electric cable and plug in their own vehicle) then the microprocessor 30 would activate the contactor 34 to open causing electrical disconnection of the remote device 18 from the grid 16.

Suppose Charlie wishes steal energy by un-plugging Alice's vehicle and plugging in his own vehicle (or any other electrical power driven device). Since Charlie does not know Alice's private key he is unable to create a valid audit message. The management device's processor would activate the contactor 34 and electrically disconnect the supply of energy once an invalid audit message is received or an expected audit message is not received (allowing for retries to recover from temporary communications failure).

Not to be deterred, Charlie attempts to steal energy by attaching his vehicle to the electric cable 20 that is charging Alice's vehicle (without unplugging Alice's vehicle). Charlie attaches his vehicle to the electric cable 20 and starts receiving energy. However, when the next energy audit signal is transmitted from the remote device to the management device 14 and the microprocessor determines that the energy records do not compare (since Charlie's device has received some of the energy), then the management device's microprocessor 30 activates the contactor 34 to open to electrically disconnect the remote device 18 from the grid 16. Charlie is therefore also disconnected. Charlie is also unable to spoof the audit message since he does not know Alice's private key required to create a valid signature.

If Alice plugs her car into a standard electrical outlet not fitted with a management device 14, her car will still charge. If Charlie steals the remote device 18 then Alice will disable her account or remove her key from a "white list" rendering her remote device 18 useless to Charlie. Additionally if Charlie stole, installed the remote device 18 and used it before Alice disables her account, Charlie's physical location is known to the system and authorities can be notified.

Advantageously, the system 10 provides certainty over two aspects of energy delivery at publicly accessible, unsupervised power points. The first is that only authorised vehicles can obtain power from a power point equipped with a management device. The second is that the timing and the amount of energy delivered to each authorised vehicle from a power point equipped with a management device is certain to both the owner of the vehicle and the supplier of the energy.

The system has been described with regards to recharging a vehicle, i.e., the energy flow passing from a charging circuit connected to the grid (first power apparatus), through the management device, through the remote device and to the vehicle (second power apparatus). The system can also be configured so as to be able to not only transfer energy from the grid to a vehicle, but also to be able to send electricity from the vehicle to the grid, during periods of vehicle inactivity in order to reduce the net metered electricity for the terminal 19 and allow the owner of the vehicle delivering the energy to be compensated with account credit.

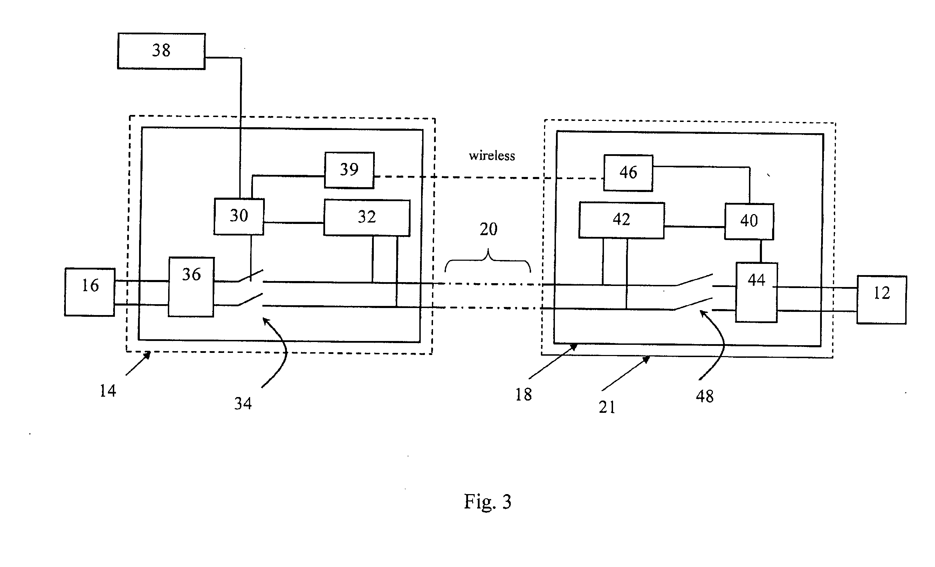

Figure 3 illustrates such an embodiment. Like numerals refer to like parts as illustrated with reference to figure 1. Authentication and energy auditing occurs in the same manner. However in this example the management device's contactor 34 remains in a closed state and the remote device further comprises a switch or contactor 48 which is configurable to electrically connect and disconnect the remote device to the vehicle's charging circuit 21 so as to supply energy to the grid 16.

In addition, the management device includes an additional transceiver in the form of a wireless transceiver 39 and the remote device includes an additional transceiver in the form of a wireless transceiver 46. In this embodiment it is the remote device's wireless transceiver 39 which transmits a digitally signed energy transfer audit signal to the management device's transceiver 46.

It will be appreciated by persons skilled in the art that numerous variations and/or modifications may be made to the invention as shown in the specific embodiments without departing from the scope of the invention as broadly described. For example whilst the energy audit signal in the embodiment illustrated in figure 1 has been described as being transmitted over the power line cable 20 by way of the communication link L1, the signal could, for instance, be a radio signal, or be transmitted through a mobile network or transmitted over an internet connection. It should be appreciated that when each device comprises a switch, either or both may be configured to terminate the transfer of energy between the devices if, for instance, an unauthorised transaction is detected. The above examples utilized a standard challenge-response authentication. It should be appreciated that other protocols in which one party presents a challenge and another party must provide a valid response to be authenticated could be utilized. The present embodiments are, therefore, to be considered in all respects as illustrative and not restrictive.

## Claims

1. An energy auditing system for a plug-in electric drive vehicle, the system comprising:
a first device electrically connectable to a first power apparatus;
an electrical power connector to establish an electrical power path between the first device and a remote device which is electrically connectable to a second power apparatus; the first device comprising:
control means to control operation of the first device;
a first sensor to selectively measure an amount of electrical energy delivered to or received from the first power apparatus and to generate a first signal representative of the measured amount;
a control switch configurable to electrically connect and disconnect the first device to the first power apparatus; and
a receiver configured to receive an energy audit signal transmitted from a remote device, the energy audit signal representative of an amount of energy transferred over the electrical power path in a specified time interval;
wherein the first device's control means is operable to compare the first signal with the received energy audit signal in the same specified time interval and to electrically disconnect the first device from the first power apparatus when a power loss between the respective devices is detected.

2. An energy auditing system according to claim 1 where the control means is operable to electrically disconnect the first device from the first power apparatus when the first signal is not substantially equal to the energy audit signal.

3. An energy auditing system according to claim 1 or 2 where the control means is operable to electrically disconnect the first device from the first power apparatus in the event that an energy audit signal is not received within a specified time interval.

4. An energy auditing system according to any one of the preceding claims where the energy audit signal includes a cryptographic signature.

5. An energy auditing system according to claim 4 where the first device's control means uses public key cryptography to authenticate the cryptographic signature and on a determination that the signature is not authentic to operate the control switch to electrically disconnect the first device from the first power apparatus.

6. An energy auditing system according to any one of the preceding claims where the receiver is a receiver portion of a powerline transceiver to enable data communication over the electrical power path, and where the energy audit signal is carried on a conductor of the electrical power path which is also used for power transmission.

7. An energy auditing system according to any of the preceding claims where the energy auditing system further comprises a remote device.

8. An energy auditing system according to claim 7 where the first power apparatus is a power grid, the first device is electrically connectable to the power grid via an outlet and the second power apparatus is an energy storage system; where the power grid functions as a power supply and the energy storage system functions as a power load, or where the power grid functions as a power load and the energy storage system functions as a power supply.

9. An energy auditing system according to claim 7 or 8 where the first device and the remote device each comprise an engagement means to engage the respective electrical power connector where the engagement means is configured to enable bidirectional power transmission.

10. An energy auditing system according to any one of claims 7 to 9 where the remote device further comprises:
a controller to control operation of the remote device;
a second sensor in communication with the control means to measure the amount of energy received over the electrical power path;
a transmitter to transmit an energy audit signal; and
a receiver to receive an energy audit signal representative of an amount of energy delivered over the electrical power path in a specified time interval.

11. An energy auditing system according to claim 10 where the remote device further comprises a control switch configurable to electrically connect and disconnect the remote device to the second power apparatus.

12. An energy auditing system according to claim 10 where the receiver of the respective first and second devices is a wireless receiver and the transmitter of the respective first and second devices is a wireless transmitter, or where the receiver of the respective first and second devices is a powerline receiver and the transmitter of the respective first and second devices is a powerline transmitter.

13. An energy auditing system according to claim 10 where the receiver of the respective first and second devices is a receiver portion of a transceiver and the transmitter of the respective first and second devices is a transmitter portion of said transceiver.

14. An energy auditing system according to claim 13 where each transceiver is a powerline transceiver and the energy audit signal is transmittable through the electrical power connector using the powerline transceivers.

15. An energy auditing system according to claim 14 where the energy audit signal is carried on a conductor of the electrical power path which is also used for power transmission.
